Europäisches Patentamt

European Patent Office

Office européen des brevets

(11) Publication number: **0 152 636**
**B1**

(12) **EUROPEAN PATENT SPECIFICATION**

(45) Date of publication of patent specification: **21.09.88**

(51) Int. Cl.⁴: **G 01 N 27/46**

(21) Application number: **84200240.4**

(22) Date of filing: **20.02.84**

(54) **Electrode assembly for measuring the concentration of an electro-chemical active species.**

(43) Date of publication of application:
**28.08.85 Bulletin 85/35**

(45) Publication of the grant of the patent:
**21.09.88 Bulletin 88/38**

(84) Designated Contracting States:
**AT BE CH DE FR GB IT LI LU NL SE**

(56) References cited:
**WO-A-83/04095**
**DE-A-2 410 809**
**GB-A-1 159 344**
**US-A-2 913 386**
**US-A-3 575 836**
**US-A-4 076 596**
**US-A-4 077 861**

(73) Proprietor: **Yokogawa Electrofact B.V.**
**Radiumweg 30**
**NL-3812 RA Amersfoort (NL)**

(72) Inventor: **Rejda, Theofil Wenzel, Dr.**
**Noordammerweg 42**
**NL-1187 CA Amstelveen (NL)**
Inventor: **Kalis, Gerben Adrianus Jorinus, Ir.**
**Van Tuyllstraat 14**
**NL-3829 AD Hooglanderveen (NL)**
Inventor: **van Mourik, Cornelis, Ir.**
**Bongerd 5**
**NL-3828 HW Hoogland (NL)**

(74) Representative: **de Wit, Gerard Frederik, Ir. et al**
**Octrooi- en Merkenbureau De Wit B.V.**
**Breitnerlaan 146**
**NL-2596 HG Den Haag (NL)**

Courier Press, Leamington Spa, England.

EP 0 152 636 B1

## Description

The invention relates to an electrode assembly for measuring the concentration of an electro-chemical active species, such as oxygen, in a fluid, having: first metallic electrode means permeable to said species and provided with a first surface exposable to said species and a second surface contacting an electrolytic medium; a barrier means for separating said electrolytic medium from said fluid; which barrier means is permeable to said species; a second electrode means having a surface in contact with said electrolytic medium; and electrical connections extending from said first and second electrode means for connection to a current measuring means and allowing a current to flow through said first electrode means for electro-chemically absorbing said species at said first electrode means and through said second electrode means without restoring said species in the electrolytic medium.

Such an electrode assembly is known from DE-A-2 410 809. With this assembly the first electrode means is formed by a porous supporting member or is supported by such members. The membrane forming the barrier is not said to be immediately mounted to the said first electrode means, so that either an electrolytic medium layer may be found between the membrane and the porous body or in case the membrane would engage the porous body, the surface area where the membrane species can leave it, is reduced considerably. Furthermore the porous body hampers ion movement in the electrolytic medium.

From US-A-2 913 386 and DE-A-2 006 682 electrode assemblies are known in which a connection of electrolytic medium exists between the electrode means and the side of the membrane turned away from the fluid.

Generally the known electrode assemblies have one or more of the following disadvantages.

A first one is, that in the course of time the characteristics of the electrode assembly change.

A cause of these changes is the fact that it is difficult to keep the thickness of the electrolyte layer between the first electrode means (normally the cathode) and the membrane constant.

A second reason, which is connected herewith in many known electrode assemblies is that the barrier permeable to the electro-chemically active species may be subjected to so-called cold flow, which means that it permanently deforms under mechanical tensions and specially elongates.

Still a reason for reduced reliability of the measuring results is, that such electrode assemblies have an electrolyte stock, which after some time period is adapted to the concentration of the electro-chemically active species in the fluid. With a very high concentration also the electrolyte will acquire a considerable concentration of this species. If after this a measurement should be carried out in a fluid having an extraordinary low concentration the species is supplied from the electrolyte. With a narrow connection of the electrolyte between the first and the second electrode means, the effect of this will be small but tenacious and with a broad connection it will be very disturbing. Also a considerable time will be necessary to obtain equilibrium.

A further source of influence on the measuring result is the pressure to which the assembly is exposed. With a higher pressure the electrolyte stock is partly expelled from the space between the first electrode means and the barrier by reason of which the space becomes narrower. An assembly of the indicated type therefore gives, if it is mounted in a duct in which a piston pump works, a reading which changes with the pulsing of the pump.

A further disturbance of the measuring results is caused by change of the geometrical dimensions of the assembly and specially of the electrolyte layer between the first electrode and the membrane under influence of temperature changes.

Because the membrane is stretched on the electrode, it will more or less bulge out as a result of the orientation of the assembly with respect to the vertical, which again implies variation of the geometrical dimensions of the electrolyte amount between both electrodes.

A further disadvantage of known assemblies is that with the manufacture often very high accuracy exigencies have to be kept in order to obtain an assembly that complies with reasonable demands.

It is an aim of the invention to eliminate or at least reduce the above indicated disadvantages and to provide an electrode assembly with a quick response and a higher reliability of the measuring result, and which easily can be manufactured without the necessity of maintaining high accuracies.

Accordingly the invention provides that said first electrode means contains a layer of sufficiently small thickness to be permable to the said species, the said first surface of it is immediately mounted to said barrier means, which supports it and that the said second surface of the first electrode means is in free contact with the said electrolytic medium.

It is remarked that GB-A-1 159 344 shows an oxygen consuming electrode for generating electrical current having a porous metal substrate with at one side a polymer layer which is selectively permeable to oxygen. Apart from the purpose of this electrode, which entails an oxygen permeability of thousands or even a million times that of a barrier in an oxygen measuring electrode, it has not been indicated whether the layer is bonded to the porous body. Even if this would be the case, the construction would be impervious to oxygen at the locations where the membrane engages solid parts of the porous substrate, whereas further this substrate hampers ion transfer in the electrolytic medium. Normally in a fuel cell there exists a gas-liquid interface in the porous body and the membrane serves the purpose of selectively passing oxygen out of a gas mixture, there being gas at both sides of the membrane, whereas with the invention the barrier at one side engages the electrolytic medium via the electrode.

With the invention the most important cause of instability and inaccuracy has been removed, to wit the electrolytic film between the barrier or membrane and the first electrode means.

Therewith it has appeared that in practice it is hardly difficult to manufacture a metallic electrode having a sufficient perviousness in comparison with the membrane used up till now and having nevertheless sufficient coherence between its particles to completely connect them electrically.

The first electrode means can be obtained with techniques known per se as for instance vacuum deposition, sputtering or chemical vapor deposition.

Though the thickness of the first electrode means is not critical, provided it has sufficient perviousness for the species, the thickness preferably is between 0.1 and 20 μm.

With respect to the metal used for the electrode means no restriction is imposed by the invention. As well usual electrode couples, such as gold and silver with the use of a chloride containing electrolyte which need a bias, as couples such as lead with silver or platinum, which can work without bias, are suitable for use with the invention.

It will be clear that the invention also in other respects does not impose limitations. So it is not necessary that the electrolytic medium is a liquid and the well known KC1-electrolyte, which at higher temperatures is conducting, can be used.

According to a further elaboration of the invention it is provided that the barrier means is a tube of a material that is permeable to the species, the said first electrode means being applied to a surface of said tube which is intended to contact the electrolytic medium.

A still further elaboration provides that the metal coating is applied to the inner wall of said tube and that the second electrode means and the electrolytic medium are located inside said tube.

The wall of the tube may consist of a suitable material such as polytetrafluorethylene (PTFE) allowing to combine a sufficient permeability for oxygen with a sufficient mechanical strength. In this connection it is important that this embodiment of the invention may result in a very large electrode area and consequently a high sensitivity, but due to the great thickness of the wall also in a greater inertia.

The connection of the electrode to the conductors of the measuring apparatus easily can be applied at the side of a seal confining said tube, where the electrolyte is not present. A further advantage of this assembly is, for instance with use of the wall known combination of gold and silver electrodes with a chloride containing electrolyte, that waste, if any, that comes from the silver electrode can fall down without giving rise to any material disturbancy because of the large electrode area.

According to a further elaboration of the invention it is provided that the metal coating is applied to the outer wall of said tube, a skirt being mounted around said tube which skirt contains the electrolytic medium and the second electrode means.

This embodiment has the important advantage, that application of the thin first electrode means can be done on the outer side of a tube, which is impler. A further advantage of this embodiment is that the fluid can be carried through the tube on which the first electrode means is applied.

With the invention the species passes through the first electrode means and reacts immediately when reaching the electrolytic medium.

The invention is suitable for working in the ppb (parts per billion) region, for instance for boiler feeding water and has also many applications in the ppm (parts per million) region, among others determining the oxygen content in industrial and domestic sewage and in the fermentation industry.

A further important advantage of the invention is, that it enables measurements in gases, such as measuring the oxygen content in breathing apparatus and in combustion gases, also at lower temperatures.

The increased temperature insensitivity of the assembly is especially in the fermentation industry of eminent importance.

This adds to the fact that with all applications at higher temperatures also "cold flow" of the membrane with the known cells is higher, an effect that with the invention hardly occurs.

The invention in the following is further elucidated with the help of the drawings in which:

Figure 1 shows a first embodiment of the assembly of the invention;

Figure 2 shows a second embodiment.

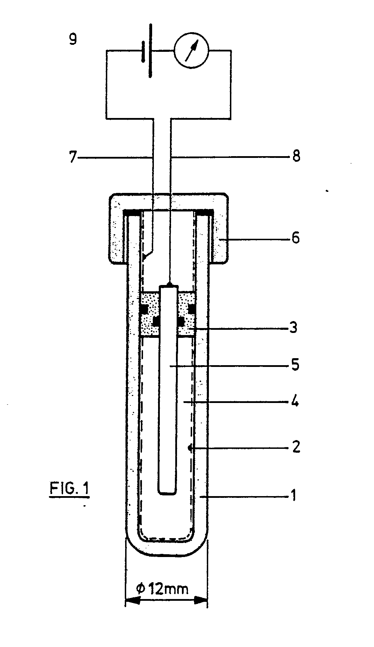

In figure 1 reference 1 indicates a tube of Teflon (PTFE) which is closed at its end. In compliance with standardisation in this technical field the tube will have a diameter of preferably 12 mm. Within this tube a gold lining 2 has been indicated with an interrupted line, which lining has a thickness of 1 μm. An electrolyte seal 3 confines a quantity of electrolyte 4, which preferably contains chloride. A second electrode 5 of silver is immersed in the electrolyte. A cap 6 closes the assembly. Above the seal 3 a conductor 7 is connected to the gold lining 2 and another conductor 8 is connected to the silver electrode 5, which also is led through the seal 3. The conductors are connected via a bias voltage source 9 to a current measuring instrument which of course can be connected in a known way via electronic measuring and control apparatus to visualising devices and/or control systems.

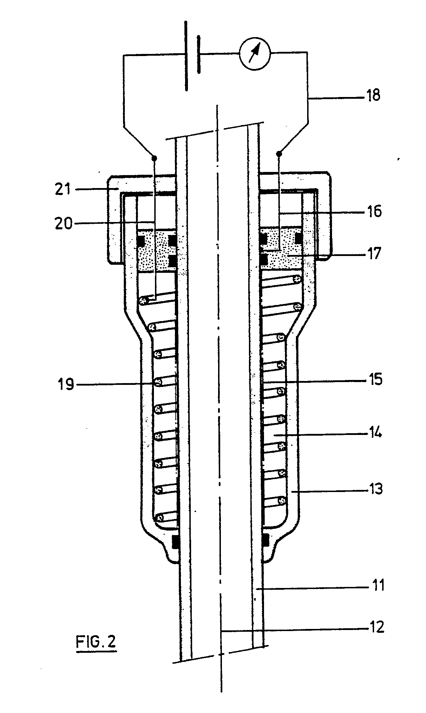

In the embodiment of figure 2 reference 11 indicates a tube of Teflon with a center line 12. On this tube a skirt 13 has been sealed which is filled with an electrolyte 14. On the wall of tube 11 a lining is present of metal, such as gold, indicated at 15. This metal lining is connected to a wire 16 of the same metal which is led through the upper wall 17 of the skirt 13 and inside or outside of this skirt is connected to a conductor 18 of another metal, if desired. A second electrode 19, for instance of silver is connected to a wire 20 of the same metal, which is led through the upper wall 17 of the skirt 13 and can be connected itself to a wire of another material, if this is desired. By means of cap 21 the skirt 13 can be fixed on tube 11.

This embodiment has the advantage that the fluid can be fed through the tube 11 and that waste falling from the silver electrode 19, if any, does not touch the gold lining 15.

The embodiments shown in the drawing serve only the purpose of elucidation: so it is for instance possible to use other metal combinations for the electrodes.

Because of the large electrode areas and the fact that thickness dimensions of the electrolyte spaces do not play any important part, the manufacturing tolerances of the assembly according to the invention are far broader than with known assemblies which may lead to very considerable cost reductions.

**Claims**

1. An electrode assembly for measuring the concentration of an electro-chemical active species, such as oxygen, in a fluid; having:

first metallic electrode means (2, 15) permeable to said species and provided with a first surface exposable to said species and a second surface contacting an electrolytic medium (4, 14);

a barrier means (1, 11) for separating said electrolytic medium from said fluid; which barrier means is permeable to said species;

a second electrode means (5, ·19) having a surface in contact with said electrolytic medium;

and electrical connections (7, 8, 16, 20) extending from said first and second electrode means for connection to a current measuring means and allowing a current to flow through said first electrode means for electro-chemically absorbing said species at said first electrode means and through said second electrode means without restoring said species in the electrolytic medium:

characterized in that said first electrode means (2,15) contains a layer of sufficiently small thickness to be permeable to the said species, the said first surface of it is immediately mounted to said barrier means, which supports it and that the said second surface of the first electrode means is in free contact with the said electrolytic medium.

2. An electrode assembly according to claim 1, in which the metallic layer (2,15) forming the first electrode means is applied to said barrier means by vacuum deposition, sputtering or chemical vapor deposition.

3. An electrode assembly according to any of the preceding claims, characterized in that the first electrode means is of a noble metal and its layer has a thickness between 0.l and 20 μm.

4. Electrode assembly according to claim 3, characterized in that the metal is gold.

5. Electrode assembly according to any of the preceding claims, characterized in that the barrier means (1, 11) is a tube (1, 11) of a material that is permeable to the species, the said first electrode means (2, 15) being applied to a surface of said tube which is intended to contact the electrolytic medium.

6. Electrode assembly according to claim 5, characterized in that the metal coating (2) is applied to the inner wall of said tube (1) and that the second electrode means (5) and the electrolytic medium are located inside said tube.

7. Electrode assembly according to claim 6, characterized in that a seal (3) confines said electrolytic medium and in that said first electrode means (2) extends until beyond said seal where it is connected to the related electrical connection (7).

8. Electrode assembly according to claim 5, characterized in that a metal coating (15) is applied to the outer wall of said tube (11), a skirt (13) being mounted around said tube which skirt contains the electrolytic medium and the second electrode means (19).

**Patentansprüche**

1. Elektrodezusammensetzung zur Messung der Konzentration einer chemisch aktiven Spezies, wie Sauerstoff, in einem Fluidum, enthältend:

ein erstes metallisches Elektrodemittel (2, 15), das für die genannte Species durchlässig ist und eine erste Oberfläche hat die der genannten Species ausgesetzt werden kann und eine zweite Oberfläche, die ein elektrolytisches Medium (4, 14) berührt.

ein Barrieremittel (1, 11) zur Trennung des genannten elektrolytischen Mediums vom genannten Fluidum, welches Barrieremittel durchlässig ist für die genannte Species;

ein weites Elektrodemittel (5, 19), das eine Oberfläche in Berührung mit dem genannten Medium hat;

und elektrische Verbindungen (7, 8, 16, 20) die sich von den ersten und zweiten Elektrodemittel ausbreiten zur Verbindung mit einem Strommessungsmittel und einen Stromfluss durch das genannte erste Elektrodemittel zur elektro-chemischer Absorption der genannten Species am ersten Elektrodemittel und durch das genannte zweite Elektrodemittel ohne Wiederherstellung der genannten Species im elektrolytischen Medium erlauben;

dadurch gekennzeichnet, dass das genannte erste Elektrodemittel (2, 15) eine Schicht von ausreichender Dünnheit um für die genannte Species durchlässig zu sein enthält, seine genannte erste Oberfläche unmittelbar am genannten Barrieremittel angeordnet ist, das ihm

trägt und dass die genannte zweite Oberfläche des ersten Elektrodemittel in freier Berührung mit dem genannten elektrolytischen Medium ist.

2 Elektrodezusammensetzung nach Anspruch 1, in welcher die metallische Schicht (2, 15), die das erste Elektrodemittel bildet, angeordnet ist am genannten Barrieremittel mittels Vakuumniederschlag, spritzen oder chemischer Dampfniederschlag angeordnet ist.

3. Elektrodezusammensetzung nach einem der vorangehenden Ansprüche, dadurch gekennzeichnet, dass das erste Elektrodemittel ein Edelmetall ist und dass die Schicht eine Dicke hat zwischen 0,1 und 20 μm.

4. Elektrodezusammensetzung nach Anspruch 3, dadurch gekennzeichnet, dass das Metall Gold ist.

5. Elektrodezusammensetzung nach einem der vorangehenden Ansprüche, dadurch gekennzeichnet, dass das Barrieremittel (1, 11) ein Rohr (1, 11) aus einem Material das durchlässig für die Species ist, wobei das genannte erste Elektrodemittel (2, 15) auf die Oberfläche dieses Rohres, das den Zweck erfüllt der Berührung mit dem elektrolytischen Medium, angeordnet ist.

6. Elektrodezusammensetzung nach Anspruch 5, dadurch gekennzeichnet, dass die Metallbeschichtung (2) an die Innenwand des genannten Rohres (1) angeordnet ist und dass das zweite Elektrodemittel (5) und das elektrolytische Medium innerhalb des Rohres angeordnet sind.

7. Elektrodezusammensetzung nach Anspruch 6, dadurch gekennzeichnet, dass eine Abdichtung (3) das elektrolytische Medium einschliesst und dass das erste Elektrodemittel (2) sich ausbreitet bis vorüber der genannte Abdichtung wo es mit der diesbezüglichen elektrischen Verbindung (7) verbunden ist.

8. Elektrodezusammensetzung nach Anspruch 5, dadurch gekennzeichnet, dass die Metallbeschichtung (15) an die Aussenwand des genannten Rohres (11) angeordnet ist, wobei ein Mantel (13) um das genannte Rohr angeordnet ist, welcher Mantel das elektrolytische Medium und das zweite Elektrodemittel (19) enthält.

**Revendications**

1. Système d'électrodes pour la mesure de la concentration d'une substance électrochimiquement active, comme l'oxygène, dans un fluide, ayant:

un premier moyen d'électrode métallique (2, 15) perméable à ladite substance et prévu d'une première surface exposable à ladite substance et une deuxième surface contactant un medium électrolytique (4, 14);

un moyen de barrière (1, 11) pour séparer ledit medium electrolytique dudit fluide; lequel moyen de barrière est perméable à ladite substance;

un deuxième moyen d'électrode (5, 19) ayant une surface contactant ledit medium électrolytique;

et connections électriques (7, 8, 16, 20) s'étendant des dits premier et deuxième moyens d'électrode pour connecter au moyen pour mesurer le courant et permittant un courant de couler à travers ledit premier moyen d'électrode pour absorber électrochimiquement ladite substancee au premier moyen d'électrode et à travers le deuxième moyen d'électrode sans restaurer ladite substance dans le medium électrolytique, caractérisé en ce que ledit premier moyen d'électrode (2, 15) contient une couche d'une minceur suffisante pour être perméable à ladite substance, ladite première surface est immédiatement appliquée au moyen de barrière laquelle la porte et que ladite deuxième surface du premier moyen d'électrode est en contact libre avec ledit medium électrolytique.

2. Système d'électrodes suivant la revendication 1, dans lequel la couche métallique (2,15) qui forme le premier moyen d'électrode est appliqué au moyen de barrière par déposition en vacuum, rouspéter ou déposition chimique de vapeur.

3. Système d'électrodes suivant une quelconque des revendications précédentes, caractérisé en ce que le premier moyen d'électrode est d'un métal noble et sa couche a une épaisseur entre O,l et 20 μm.

4. Système d'électrodes suivant la revendication 3, caractérisé en ce que le métal est d'or.

5. Système d'électrodes suivant une quelconque des revendications précédentes, caractérisé en ceque le moyen de barrière (1, 11) est une tube (1, 11) de matériel qui est perméable à la substance, ledit premier moyen d'électrode (2, 15) étant appliqué à la surface dudit tube qui est destinée à contacter le medium électrolytique.

6. Système d'électrodes suivant la revendication 5, caracterisé en ce que le revêtement métallique (2) est appliqué à la paroi intérieure dudit tube (1) et que le deuxième moyen d'électrode (5) et le medium électrolytique sont situé à l'intérieur du tube.

7. Système d'électrodes suivant la revendication 6, caractérisé en ce qu'une fermeture (3) confine ledit medium électrolytique et en ce que ledit premier moyen d'électrode (2) s'étend jusqu'au-dessous de ladite fermeture où il est connecté à la connnection électrique concernée (7).

8. Système d'électrodes suivant la revendication 5, caractérisé en ce qu'un revêtement métallique (15) a été appliqué à la paroi extérieure du tube (11), un manteau (13) étant monté autour du tube lequel manteau contient le medium électrolytique et le deuxième moyen d'électrode (19).

FIG. 1

$\phi$ 12mm

FIG.2